# EUROPÄISCHE PATENTSCHRIFT

(11) **EP 2 130 104 B1**
(45) Veröffentlichungstag und Bekanntmachung des Hinweises auf die Patenterteilung: **19.06.2013**
(21) Anmeldenummer: 07819830.6
(22) Anmeldetag: 15.11.2007
(51) Int. Cl.: G05B 19/418, H04L 29/08

(54) **VORRICHTUNG UND VERFAHREN ZUM STEUERN UND ÜBERWACHEN VON HAUSTECHNIKEINRICHTUNGEN**
DEVICE AND METHOD FOR CONTROLLING AND MONITORING DOMESTIC TECHNOLOGY DEVICES
DISPOSITIF ET PROCÉDÉ POUR COMMANDER ET SURVEILLER DES ÉQUIPEMENTS DOMOTIQUES

(30) Priorität: 02.03.2007 DE 102007010803
(43) Veröffentlichungstag der Anmeldung: 09.12.2009
(73) Patentinhaber: Viessmann Werke GmbH & Co. KG, 35107 Allendorf (DE)
(72) Erfinder: DAFFNER, Klaus-Josef, 61440 Oberursel (DE); HEINMÖLLER, Gerhard, 35279 Neustadt (DE); BATTEFELD, Lothar, 35110 Frankenau (DE)
(74) Vertreter: MERH-IP Matias Erny Reichl Hoffmann
(86) Internationale Anmeldenummer: PCT/EP2007/009891
(87) Internationale Veröffentlichungsnummer: WO 2008/107004

(56) Entgegenhaltungen:
- EP-A- 0 825 506
- WO-A-98/53581
- KLESPER T: "DER INTERNET-ZUGRIFF AUFS LON. WELTWEITER ZUGRIFF AUF DIE SENSORIK UND AKTORIK VON AUTOMATISIERUNGS-PROJEKTEN" ELEKTRONIK, WEKA FACHZEITSCHRIFTENVERLAG, POING, DE, Bd. 47, Nr. 8, 14. April 1998 (1998-04-14), Seite 60,62,64,66, XP000780190 ISSN: 0013-5658

## Beschreibung

Die Erfindung betrifft eine Vorrichtung zum Steuern und Überwachen von zumindest einer Haustechnikeinrichtung nach dem Oberbegriff des Anspruchs 1 und 6 und ein Verfahren zum Steuern und Überwachen zumindest einer Haustechnikeinrichtung nach dem Obergriff des Anspruchs 14.

Aus der DE 10109196 B4 ist eine Vorrichtung und ein Verfahren zum Steuern und Überwachen von zumindest einer Haustechnikeinrichtung bekannt, wobei die Vorrichtung eine Steuerung und Überwachung über das Internet oder ein lokales Netzwerk erlaubt. Die Konfigurationsdaten der zu steuernden oder zu überwachenden Haustechnikeinrichtung sind auf einem Systemrechner gespeichert, der Befehlssignale, die über das Internet oder über das lokale Netzwerk an die Haustechnikeinrichtung übertragen werden, abhängig von den Konfigurationsdaten generiert. Die Steuereinheit verfügt über keine konfigurierbare Benutzerschnittstelle. Die übertragenen Befehlssignale werden von einem Protokollkonverter konvertiert und über ein Bussystem an die zu steuernde oder überwachende Haustechnikeinrichtung übertragen. Die Haustechnikeinrichtungen empfangen die konvertierten Befehlssignale und führen die darin codierten Befehle abhängig von einem vorab implementierten Betriebsprogramm aus.

WO 98/52581 A offenbart einen Server, der über eine Netzwerkverbindung mit einer Reihe verschiedener Endgeräte in Verbindung steht. Der Server steht weiterhin über eine Netzwerkverbindung mit einer Reihe von Internet-Clients in Verbindung. Der Server ermittelt HTML-Seiten mit integrierten Applets an diese Internet-Clients. Über diese ermittelten Webseiten können die Clients Steuerdaten der Endgeräte abfragen bzw. Steuerbefehle an diese Endgeräte übertragen.

Klesper T: "Der Internet-Zugriff aufs LON. weltweiter Zugriff auf die Sensorik und Aktorik von Autmostisierungs-Projekten" Elektronik, WEKA, Fachzeitschriftenverlag, Poing, DE, Bd. 47, Nr. 8, 14. April 1998, Seite 60, 62, 64 66, ISSN: 0013-5658) beschreibt den Internet-basierten Zugriff von einem beliebigen Rechner auf Sensoren oder Aktoren einer Anlage, wobei die Internet-Clients über Java-basierte Applets auf die Aktoren bzw. Sensoren zugreifen können.

In der EP 0 825 506 A ist ein System für eine Verfahrenssteuerung mittels eines Remote-Zugriffs offenbart. Hierbei sind verschiedene Clients über das Internet mit einem sogenannten "Sever Digital Data Processor" verbunden, der über das Internet ein Applet bereitstellt, um den Clients einen Remote-Zugriff auf verschiedene Endgeräte zu ermöglichen.

Der Erfindung liegt daher insbesondere die Aufgabe zugrunde, eine gattungsgemäße Vorrichtung zum Steuern und Überwachen von wenigstens einer Haustechnikeinrichtung und ein gattungsgemäßes Verfahren zum Steuern und Überwachen von wenigstens einer Haustechnikeinrichtung bedienerfreundlicher und flexibler zu gestalten und insbesondere die Installation eines Betriebsprogramms und/oder einer insbesondere graphischen Benutzerschnittstelle auf der Haustechnikeinrichtung zu vereinfachen.

Die Erfindung geht aus von einer Vorrichtung mit einem Netzwerk-Serverrechner und einer Steuereinheit zum Steuern einer Haustechnikeinrichtung, wobei der Netzwerk-Serverrechner eine Speichereinheit zum Speichern von wenigstens einer Webseite mit zumindest einem Eingabemittel zum Betätigen der Steuereinheit und zumindest eine Kommunikationsschnittstelle zum Herstellen einer Netzwerkverbindung, über welche die Webseite abrufbar ist, umfasst.

Es wird vorgeschlagen, dass der Netzwerk-Serverrechner zumindest teilweise in die Steuereinheit integriert ist. Dadurch kann die Kommunikation über das Internet oder über ein lokales Netzwerk unmittelbar mit der Steuereinheit erfolgen und ein Umweg über einen zentralen, d.h. viele Kilometer entfernt von der Steuereinheit in einem Servicezentrum angeordneten und zur Vermittlung einer Kommunikation mit einer Vielzahl von Steuereinheiten für Haustechnikeinrichtungen ausgelegten Steuerrechner kann vorteilhaft entfallen. Dadurch wird eine besonders flexibel bedienbare Steuereinheit erreicht, die sowohl über das Internet als auch über ein lokales Netzwerk, beispielsweise vom Typ LAN oder Ethernet, bedienbar ist. Durch die Integration der Webserverfunktionalität in die Steuereinheit kann eine Bedienerfreundlichkeit gesteigert werden.

In einer Weiterbildung der Erfindung wird vorgeschlagen, dass die Steuereinheit eine erste Kommunikationsschnittstelle zum Herstellen einer lokalen Neztwerkverbindung und eine zweite Kommunikationsschnittstelle zum Herstellen einer Internetverbindung umfasst. Dadurch kann die Bedienung noch benutzerfreundlicher und flexibler gestaltet werden, da verschiedene Möglichkeiten zum Herstellen einer Kommunikationsverbindung und ggf. sogar die Möglichkeit des gleichzeitigen Zugriffs über das Internet und über das lokale Netzwerk eröffnet wird.

Ferner wird vorgeschlagen, dass die erste Kommunikationsschnittstelle als Ethernet-Schnittstelle ausgebildet ist. Dadurch kann die Steuereinheit in ein flexibel rekonfigurierbares Point-to-Point-Netzwerk integriert werden.

Wenn die Steuereinheit ein Schaltelement zum Starten eines automatischen Installationsvorgangs umfasst, in welchem die Steuereinheit die Webseite über die Kommunikationsschnittstelle von einem zentralen Installations-Serverrechner anfordert, kann die Installation weitgehend automatisiert ablaufen, ohne dass ein Benutzer komplexere Eingriffe als das bloße Drücken des Schaltelements vornehmen muss. Das Schaltelement kann beispielsweise als Druckknopf ausgestaltet sein.

Wenn die Steuereinheit eine Zeiterfassungseinheit umfasst und dazu ausgelegt ist, den Installationsvorgang zu starten, wenn ein Bediener das Schaltelement zumindest über eine vorgegebene Betätigungsdauer betätigt, kann ein versehentliches Auslösen des Installationsvorgangs durch ein kurzes Drücken auf das Schaltelement vermieden werden.

Ferner wird vorgeschlagen, dass die Steuereinheit dazu vorgesehen ist, zum Starten des Installationsvorgangs zumindest eine Teilnehmerliste eines lokalen Netzwerks an den zentralen Installations-Serverrechner zu übertragen. Dadurch kann eine an die Teilnehmerliste angepasste Installation ermöglicht werden. Der Begriff Teilnehmerliste umfasst in diesem Zusammenhang insbesondere eine Reglerliste von Reglern einer Heizungsanlage, die über ein lokales Netzwerk, beispielsweise ein LON-Netzwerk, mit der Steuereinheit der Heizungsanlage kommunizieren.

Ferner betrifft die Erfindung eine Vorrichtung zum Steuern und Überwachen von zumindest einer Haustechnikeinrichtung, insbesondere einer Heizungsanlage, die wenigstens einen Installations-Serverrechner mit einer Speichereinheit zum Speichern von Konfigurationsdaten der Haustechnikeinrichtung umfasst. Dabei ist der Installations-Serverrechner insbesondere dazu ausgelegt, über eine Internetverbindung zumindest Identifikationsdaten einer Haustechnikeinrichtung zu empfangen und die Konfigurationsdaten der Haustechnikeinrichtung abhängig von dem Identifikationsdaten aus der Speichereinheit zu lesen. Der Installations-Serverrechner erzeugt zumindest einen Konfigurationsparameter für eine Benutzerschnittstelle der Haustechnikeinrichtung abhängig von den Konfigurationsdaten und überträgt den zumindest einen Konfigurationsparameter über eine Kommunikationsverbindung an die Haustechnikeinrichtung zu übertragen.

Als Konfigurationsparameter kommen insbesondre Seiten für eine graphische Benutzereinstellung, die beispielsweise abhängig von einer Sprachauswahl sein können, Ininitialisierungsdateien, Aktualisierungen der Software oder der Seiten, insbesondere der Webseiten der graphischen Benutzerschnittstelle bzw. Parameter, die einen bevorzugten Internetprovider bereffen, in Betracht.

Zur Verbesserung eines gattungsgemäßen Verfahrens geht die Erfindung aus von einem Verfahren zum Steuern und Überwachen von zumindest einer Haustechnikeinrichtung, insbesondere einer Heizungsanlage, wobei in einem zur Ermittlung der Konfigurationsdaten bzw. Reglerliste der Haustechnikeinrichtung die Reglerliste von der Haustechnikeinrichtung abgerufen wird und dann in einem Benutzerschnittstellen-Konfigurationsschritt zumindest ein Konfigurationsparameter für eine Benutzerschnittstelle abhängig von den Konfigurationsdaten der Haustechnikeinrichtung erzeugt wird und in einem Übertragungsschritt der Konfigurationsparameter der Benutzerschnittstelle über eine Kommunikationsverbindung an die Haustechnikeinrichtung übertragen wird.

Es wird vorgeschlagen, dass der Benutzerschnittstellen-Konfigurationsschritt von einem Installations-Serverrechner ausgeführt wird, der in einem Identifikationsschritt Identifikationsdaten der Haustechnikeinrichtung über eine Internetverbindung empfängt und die Konfigurationsdaten der Haustechnikeinrichtung zumindest teilweise abhängig von den Identifikationsdaten aus einer Speichereinheit liest.

Beispiele für Konfigurationsparameter sind beispielsweise Initialisierungsdateien oder auch Webseiten, insbesondere solche in HTML, die abhängig von den Konfigurationsdaten und den Bedienerwünschen generiert oder aus einem Verzeichnis geladen wurden.

Ein wesentlicher Aspekt der Erfindung ist, die Kommunikation zwischen einem Eingabeterminal und der Haustechnikeinrichtung bei einer Erstinstallation über einen zentralen Installations-Serverrechner zu vermitteln. Das Eingabeterminal kann als tragbarer Computer oder auch als internetfähiges Mobiltelefon ausgebildet sein und ein Bediener oder Wartungstechniker, der die Haustechnikeinrichtung steuern oder überwachen möchte, muss lediglich die Identifikationsdaten, beispielsweise ein Passwort und einen Benutzernamen bzw. eine Kennnummer der Haustechnikeinrichtung bereithalten und über die Internetverbindung an den Installations-Serverrechner weiterleiten.

Wenn die Bedienung und Steuerung der Haustechnikeinrichtung stets zentral über den Installations-Serverrechner erfolgt und die aktuellen Konfigurationsdaten bzw. die vorgenommenen Änderungen stets in der Speichereinheit gespeichert werden, kann zudem eine Unklarheit über die aktuelle Konfiguration der Haustechnikeinrichtung vermieden werden. Eine Steuerung und Überwachung der Haustechnikeinrichtung durch eine Mehrzahl von Nutzern, beispielsweise durch einen Hersteller, einen Wartungsdienst und einen Endverbraucher, kann in einer einfachen Weise ermöglicht werden.

Der Installations-Serverrechner ist insbesondere zum Empfang von Identifikationsdaten über eine Internetverbindung ausgelegt, wenn er über einen Webserver, beispielsweise eine Apache-Webserver mit entsprechenden http-Schnittstellen umfasst und über eine stets erreichbare, insbesondere feste Internetadresse verfügt. Der Installations-Serverrechner ist dazu ausgelegt, Daten aus der Speichereinheit zu lesen, wenn ein Treiber der Speichereinheit auf dem Server installiert ist oder wenn der Installations-Serverrechner über ein Netzwerk, beispielsweise ein lokales Netzwerk (LAN) auf die Speichereinheit zugreifen kann. Der Installations-Serverrechner ist dazu ausgelegt, über eine Kommunikationsverbindung einen Konfigurationsparameter für eine Benutzerschnittstelle an die Haustechnikeinrichtung zu übertragen, wenn er über eine entsprechende Schnittstelle verfügt. Eine solche Schnittstelle kann beispielsweise eine http- und ftp-Schnittstelle sein.

In einer Weiterbildung der Erfindung wird vorgeschlagen, dass die Vorrichtung eine Programmkonfigurationseinheit zum Konfigurieren einer Benutzerschnittstelle und/oder eines Betriebsprogramms bzw. der Benutzerschnittstelle für eine Haustechnikeinrichtung abhängig von den Konfigurationsdaten der Haustechnikeinrichtung umfasst. Dadurch kann nicht nur die Installation und ein Update des laufende Betriebsprogramms bzw. der Firmware über den Installations-Serverrechner erfolgen sondern auch die Installation und ein Update der graphischen Benutzerschnittstelle kann über das Internet durchgeführt werden.

Nach einem weiteren Aspekt der Erfindung ist der Installations-Serverrechner dazu ausgelegt, die abhängig von den Konfigurationsdaten erzeugte graphische Benutzerschnittstelle auf der Haustechnikeinrichtung zu installieren. Dadurch wird die Installation weiter vereinfacht.

Eine abhängig von dem Installationsort und den am Installationsort zur Verfügung stehenden Kommunikationsmitteln optimierte Kommunikationsverbindung kann erreicht werden, wenn der Installations-Serverrechner dazu ausgelegt ist, über die Kommunikationsverbindung einen Internetzugang der Haustechnikeinrichtung zu konfigurieren. Dazu kann der Installations-Serverrechner beispielsweise über eine in der Speichereinheit gespeicherte Liste von lokalen Internetprovidem verfügen.

Wenn die Kommunikationsverbindung eine Internet-Kommunikationsverbindung ist, kann vorteilhaft ein weltweit einheitlicher Standard genutzt werden und die Kommunikationsverbindung kann weitgehend unabhängig vom Kommunikationsort jederzeit in einer einfachen Weise hergestellt werden. Wenn der Installations-Serverrechner dazu ausgelegt ist, eine Formulardatei und die Formulardatei über die Internetverbindung an das Benutzerterminal zu übertragen, so dass der Installations-Serverrechner ein Internetportal zu Verfügung stellt, können die Bedienerwünsche in einer besonders einfachen Weise abgefragt werden und Eingaben in einem falschen Datenformat können einfach vermieden werden. Die Formulardatei kann beispielsweise als eine html-Datei mit Formularfunktion ausgeführt sein.

Die Steuerung kann vollständig internetbasiert erfolgen, wenn der Installations-Serverrechner dazu vorgesehen ist, eine von einem Benutzer ergänzte Formulardatei über die Internetverbindung oder über ein Mobilfunknetz, beispielsweise über SMS zu empfangen und zumindest eine Benutzerwunschkenngröße aus der Formulardatei zu extrahieren, wobei die Programmkonfigurationseinheit das Betriebsprogramm abhängig von der Benutzerwunschkenngröße konfiguriert. Benutzerwunschkenngrößen in diesem Sinne können beispielsweise eine Sprache für die Installation des Betriebsprogramms oder Betriebskenngrößen wie beispielsweise eine Raumsolltemperatur im Fall einer Heizungsanlage sein. Wenn die Vorrichtung einen Backup-Serverrechner umfasst, der dazu ausgelegt ist, die Funktion des Installations-Serverrechners zu übernehmen, falls dieser ausfällt, kann eine sichere Verfügbarkeit der Steuerungsfunktion gewährleistet werden und es kann vermieden werden, dass die Haustechnikeinrichtung im Fall eines Ausfalls des primären Installations-Serverrechners nicht mehr erreichbar ist.

In einer vorteilhaften Ausgestaltung der Erfindung umfasst die Vorrichtung zudem einen Monitorrechner zum Überwachen einer Funktion des Installations-Serverrechners und des Backup-Serverrechners.

Wenn der Installations-Serverrechner dazu ausgelegt ist, über die Kommunikationsverbindung Diagnosedaten von der Haustechnikeinrichtung abzufragen, kann im Falle einer Fehlfunktion deren Ursache schnell und einfach, insbesondere über das Internet, erkennbar sein. Fehler können basierend auf den Diagnosedaten durch die Erzeugung eines geeigneten Befehlssignals mittels des Installations-Serverrechners aus der Ferne behoben werden, ohne dass ein Wartungstechniker vor Ort sein muss. Je nach der Art des Fehlers kann beispielsweise eine Rekonfiguration des Betriebsprogramms bzw. der Firmware, ein Update des Betriebsprogramms oder eine neue Installation des Betriebsprogramms aus der Ferne erfolgen. Eine große Zahl von Konfigurationsdaten der graphischen Benutzerschnittstelle kann in einer transparenten Weise verwaltet werden, wenn die Vorrichtung eine die Speichereinheit umfassende Datenbank aufweist. Als Datenbank kommt z.B. eine Datenbank vom Typ MySQL in Betracht.

Das erfindungsgemäße Verfahren zum Steuern und Überwachen von zumindest einer Haustechnikeinrichtung, insbesondere einer Heizungsanlage, geht aus von einem Verfahren, in dem in einem Benutzerschnittstellen-Konfigurationsschritt zumindest Konfigurationsparameter für eine Benutzerschnittstelle abhängig von den Konfigurationsdaten der Haustechnikeinrichtung erzeugt wird und in einem Übertragungsschritt der Konfigurationsparameter bzw. Dateien für eine graphische Benutzerschnittstelle über eine Kommunikationsverbindung an die Haustechnikeinrichtung übertragen wird.

Es wird vorgeschlagen, dass der Benutzerschnittstellen-Konfigurationsschritt von einem Installations-Serverrechner ausgeführt wird, der in einem Identifikationsschritt Identifikationsdaten der Haustechnikeinrichtung über eine Internetverbindung empfängt und die Konfigurationsdaten der Haustechnikeinrichtung zumindest teilweise abhängig von den Identifikationsdaten der Speichereinheit liest oder von der Haustechnikeinrichtung anfordert. Durch die erfindungsgemäße Zuweisung des Benutzerschnittstellen-Konfigurationsschritts an einen Installations-Serverrechner können die notwendigen Rechen- und Speicherkapazitäten in diesem Installations-Serverrechner bereitgestellt werden und Bedienung, Steuerung und/oder Überwachung kann vermittelt durch den Installations-Serverrechner durch jedes beliebige Eingabeterminal erfolgen.

Weitere Vorteile der Erfindung ergeben sich aus der nachfolgenden Beschreibung der beigefügten Zeichnungen. Die Figuren, die Ansprüche und die Beschreibung enthalten zahlreiche Merkmale in Kombination, die der Fachmann auch einzeln betrachten und zu zweckmäßigen weiteren Kombinationen zusammenfassen wird.

Dabei zeigen:
- Fig. 1: eine schematische Darstellung einer Vorrichtung zum Steuern und Überwachen mehrerer Heizungsanlagen;
- Fig. 2: den schematischen Aufbau eines Installations-Serverrechners der erfindungsgemäßen Vorrichtung;
- Fig. 3: ein Diagramm zum Ablauf eines normalen Lebenszyklus einer Steuereinheit einer Heizungsanlage;
- Fig. 4: ein Diagramm zu möglichen Übergängen zu einem ersten, initialisierten Zustand der Steuereinheit der Heizungsanlage;
- Fig. 5: ein Diagramm zu möglichen Übergängen zu einem zweiten, aktivierten Zustand der Steuereinheit der Heizungsanlage;
- Fig. 6: ein Diagramm zu möglichen Übergängen zu einem dritten Zustand der Steuereinheit der Heizungsanlage, in welchem eine Installation vorbereitet ist;
- Fig. 7: ein Diagramm zu einem möglichen Übergang in einen fünften Zustand der Steuereinheit der Heizungsanlage, in der die Heizungsanlage in Betrieb genommen ist;
- Fig. 8: ein Sequenzdiagramm eines normalen Lebenszyklus einer Steuereinheit der Heizungsanlage;
- Fig. 9: ein Sequenzdiagramm zu einem Software-Upload und zu einer Software-Aktivierung der Steuereinheit der Heizungsanlage;
- Fig. 10: ein Sequenzdiagramm eines gesamten Installationsprozesses zur Installation eines Betriebsprogramms auf der Steuereinheit der Heizungsanlage;

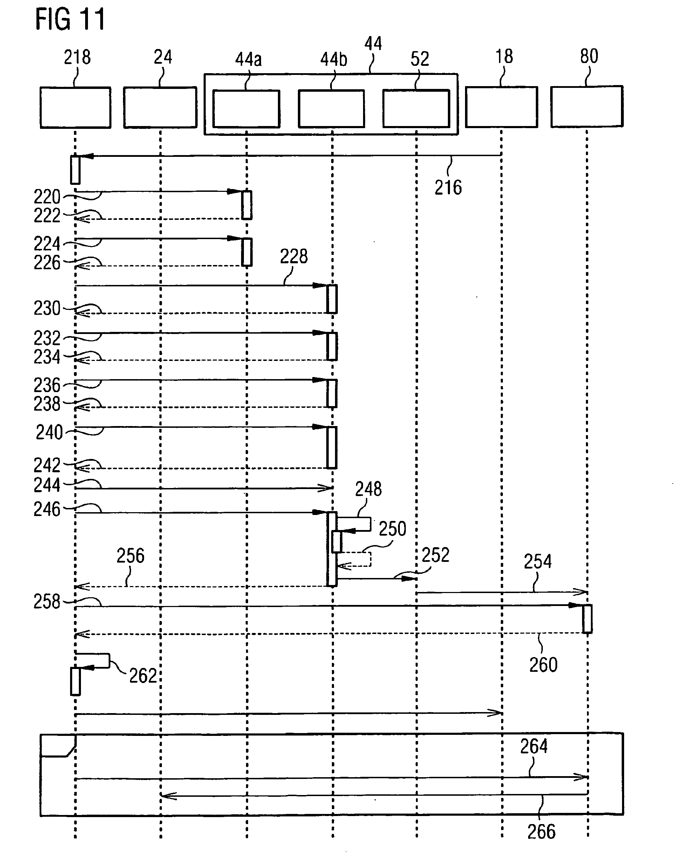

- Fig. 11: ein Diagramm zu einer Monitoring-Sequenz zum Testen eines Installationsportals auf dem Installations-Serverrechner nach Fig. 2;
- Fig. 12: eine Vorrichtung zum Steuern und Überwachen einer Heizungsanlage nach einer alternativen Ausgestaltung der Erfindung;
- Fig. 13: ein Ablaufdiagramm zur Installation eines Betriebsprogramms und einer Benutzerschnittstelle mit Webseiten einer Steuereinheit einer Heizungsanlage gemäß Fig. 12;
- Fig. 14: ein Diagramm zum Ablauf einer Steuerung und Überwachung der Steuereinheit der Heizungsanlage nach den Figuren 12 und 13;
- Fig. 15: ein Diagramm zu einer alternativen Installationsmöglichkeit für das Betriebsprogramm in der Steuereinheit der Heizungsanlage nach den Figuren 12 bis 14; und
- Fig. 16: eine auf einem Netzwerk-Serverrechner gespeicherte Webseite zum Betätigen einer Haushaltstechnikeinrichtung.

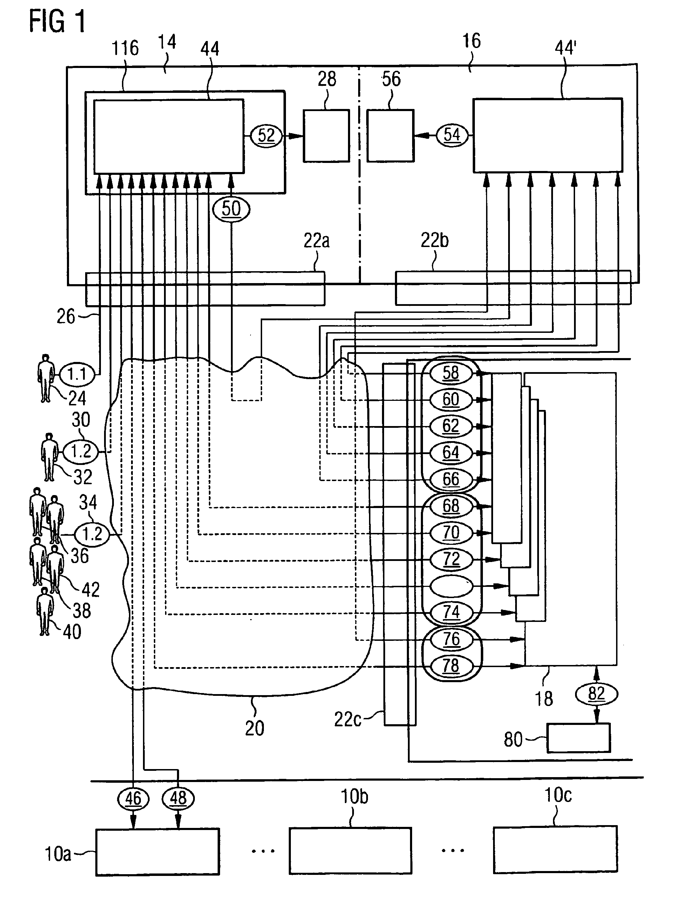

Fig. 1 zeigt schematisch eine Vorrichtung zum Steuern und Überwachen einer Vielzahl von Haustechnikeinrichtungen 10a bis 10c, die im dargestellten Ausführungsbeispiel als Heizungsanlagen mit programmierbaren Steuereinheiten ausgebildet sind. Die Vorrichtung umfasst einen ersten, als Live-Server ausgebildeten Installations-Serverrechner 14, einen zweiten, als Backup-Serverrechner 16 ausgebildeten Installations-Serverrechner, dessen Konfiguration ein Spiegelbild der Konfiguration des Installations-Serverrechners 14 ist und einen Monitorrechner zum Überwachen der Funktion des Installations-Serverrechners 14 und des Backup-Rechners 16.

Die Haustechnikeinrichtungen 10a bis 10c, der Installations-Serverrechner 14, der Backup-Serverrechners 16 und der Monitorrechner 18 kommunizieren über das Internet 20 und sind dazu mit den notwendigen Modems bzw. Schnittstellen ausgestattet, die im Folgenden näher beschrieben werden. Der Installations-Serverrechner 14, der Backup-Serverrechner 16 und der der Monitorrechner 18 sind jeweils über eine Firewall 22a bis 22c mit dem Internet 20 verbunden und geschützt. Über das Internet 20 kommuniziert der Installations-Serverrechner 14 mit einem Systemadministrator 24 über eine abgesicherte Datenverbindung 26, die im vorliegenden Ausführungsbeispiel eine secure-shell SSH ist, die SSH-Schnittstelle dient zum Administrieren eines weiter unten detailliert beschriebenen Installationsportals durch einen Systemadministrator auf der Shell-Ebene. Über die SSH-Schnittstelle bzw. Kommunikationsverbindung 26 kann der Systemadministrator 24 im Rahmen des Betriebs des Installationsportals Software bzw. Software-Ergänzungen und Updates installieren. Dies können sowohl betriebssystemnahe Software-Komponenten als auch Software-Komponenten des Installationsportals betreffen. Ferner kann der Systemadministrator 24 über die Kommunikationsverbindung 26 ein Monitoring-System betreiben, welches die Verfügbarkeit des Installationsportals überwacht. Der Systemadministrator kann mit Hilfe von Überwachungsmitteln in dem Installations-Serverrechner 14, beispielsweise mit Hilfe von Monitoring-Skripten, ausgewählte Geschäftsprozesse des Installationsportals bzw. des Installations-Serverrechners 14 auf ihre Funktionsfähigkeit hin überprüfen. Ferner kann der Systemadministrator einen Mailserver 28 betreiben. Der Mailserver 28 des Installations-Serverrechners 14 dient beispielsweise dazu, einen Installateur über den Ausgang eines Installationsprogramms eines Betriebsprogramms auf einer Haustechnikeinrichtung 10a bis 10c per E-Mail zu informieren. Ferner kann der Systemadministrator 24 über die abgesicherte Kommunikationsverbindung 26 im Falle einer Havarie oder Wartung des Installations-Serverrechners 14 den Backup-Serverrechner 16 aktivieren, um die weitere Verfügbarkeit des Installationsportals herzustellen. Außerdem kann der Systemadministrator 24 über die abgesicherte Kommunikationsverbindung 26 manuell oder automatisiert zur Absicherung eines Datenverlustes durch einen Havarie-Fall ein Backup der Konfigurations-, Stamm- und Bewegungsdaten des Installationsportals vornehmen.

Ferner kommuniziert der Installations-Serverrechner 14 über eine Filetransfer-Protokoll-(ftp)-Schnittstelle 30 mit einem Lieferanten der Steuereinheit der Haustechnikeinrichtung 10a - 10c. Die ftp-Schnittstelle 28 dient zur Übertragung einer die Geräteinformationen enthaltenden Datei von dem Hardware-Lieferanten 30 an den Installations-Serverrechner 14. Über die ftp-Schnittstelle 28 kann der Hardware-Lieferant 30 die für die Installation der Betriebssoftware bzw. des Betriebsprogramms notwendigen Informationen wie eine Seriennummer, einen Freischaltcode und einen Gerätetyp an den Installations-Serverrechner 14 übertragen. Ferner kann der Hardware-Lieferant 30 anhand zum Beispiel der Seriennummer den Status der von ihm produzierten Hardware einsehen. Über eine ihm vorliegende, im Ausführungsbeispiel als http-Schnittstelle ausgebildete Internetschnittstelle 34 können weitere Personengruppen, beispielsweise der Systemadministrator 24, der Hardware-Lieferant 32, ein Software-Lieferant 36, ein Installateur 38, eine Supportdienst 40 sowie ein Endbenutzer 42 auf die Weboberflächen des Installationsportals 44 auf dem Installations-Serverrechner 14 zugreifen. Mit jeder der Haustechnikeinrichtungen 10a bis 10c kommuniziert der Installations-Serverrechner 14 über das Internet 20 und jeweils eine http-Schnittstelle 46 zum Befehlsaustausch zwischen dem Haustechnikeinrichtungen 10a bis 10c und dem Installationsportal 44 und über eine ftp-Schnittstelle 48 zum Übertragen von Dateien von dem Installations-Serverrechner 14 auf die Haustechnikeinrichtung 10a bis 10c. Die http-Schnittstelle 46 und die ftp-Schnittstelle 48 sind in Fig. 1 nur exemplarisch an der ersten Haustechnikeinrichtung 10a dargestellt, sind aber an den weiteren Haustechnikeinrichtung 10b und 10c baugleich vorhanden.

Der Installations-Serverrechner 14 und der Backup-Serverrechner 16 kommunizieren über eine Secure Shell-Schnittstelle 50 zur Sicherung des Daten-Backups des Installationsportals 44 in einer Kopie 44' des Installationsportals. Das Installationsportal 44 kommuniziert über eine smtp-Schnittstelle 52 mit dem Mailserver 28.

Analog kommuniziert die Kopie 44' des Installationsportals auf dem Backup-Serverrechner 16 über eine weitere smtp-Schnittstelle 54 mit einem Mailserver 56 des Backup-Serverrechners 16.

Der Monitorrechner 18 kommuniziert über eine http-Schnittstelle 58 zur Kontroller der Webserver-Erreichbarkeit der Kopie 44' des Installationsportals mit dem Backup-Serverrechner 16, über eine ftp-Schnittstelle 60 kontrolliert der Monitorrechner 18 den Datenaustausch durch die Ausführung der weiter unten beschriebenen Monitoring-Skripte. Über eine TCP-Schnittstelle 62 kontrolliert der Monitorrechner 18 den Zugriff auf eine Datenbank der Kopie 44' des Installationsportals, eine snmp-Schnittstelle 64 dient zur Systemüberwachung (beispielsweise der CPU-Last, der Festplattenkapazität etc.) des Backup-Serverrechner 16 der Kopie 44' des Installationsportals und icmp-Schnittstelle 66 dient zur Kontrolle der Erreichbarkeit des Backup-Servers 16 in der Kopie 44' des Installationsportals. Eine http-Schnittstelle 68 des Monitorrechners 18 entspricht der http-Schnittstelle 58 und dient zur Kontrolle der Webserver-Erreichbarkeit des Installationsportals 44 durch die Ausführung der Monitoring-Skripte. Eine ftp-Schnittstelle 70 dient zur Kontrolle des Datenaustausches durch die Ausführung der von dem Monitorrechner 18 auf den Installations-Serverrechner 14 übertragenen Monitoring-Skripte. Eine TCP-Schnittstelle 72 entspricht der Eine TCP-Schnittstelle 62 und dient zur Kontrolle des Zugriffs auf eine Datenbank des Installationsportals 44, eine snmp-Schnittstelle dient zur Überwachung der CPU-Last und der Festplattenkapazität des Installations-Serverrechners 14 und eine icmp-Schnittstelle 76 dient zur Kontrolle der Erreichbarkeit des Installations-Serverrechners 14 des Installationsportals 44. Eine ssh-Schnittstelle 76 dient zur Kontrolle des Shell-Zugriffs auf den Backup-Serverrechner 16 der Kopie 44' des Installationsportals und eine ssh-Schnittstelle dient zur Kontrolle des Shell-Zugriffs auf den Installations-Serverrechner 14 des Installationsportals 44. Ferner umfasst der Monitor-Rechner einen Mailserver 80 mit einer POP3-Schnittstelle 82 zum E-Mail-Empfang durch die von den Monitor-Skripten ausgelösten Tests.

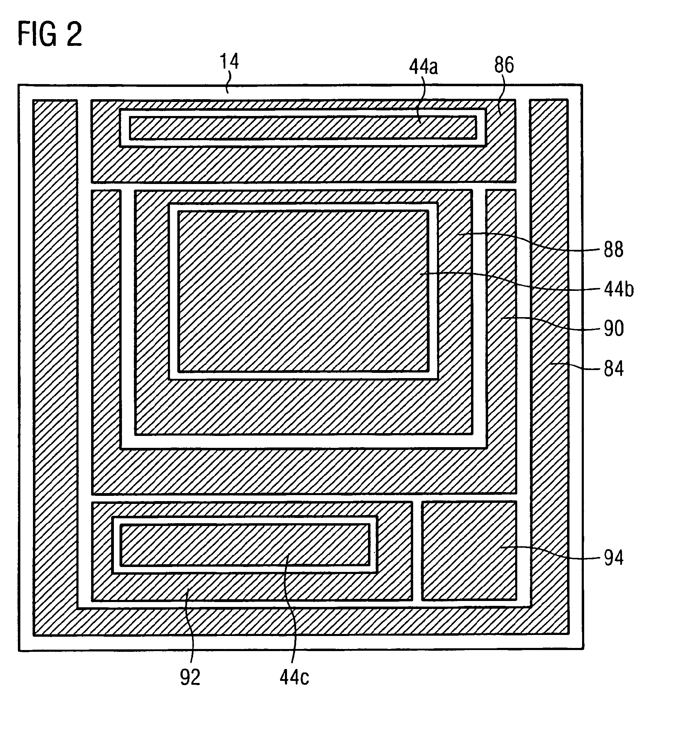

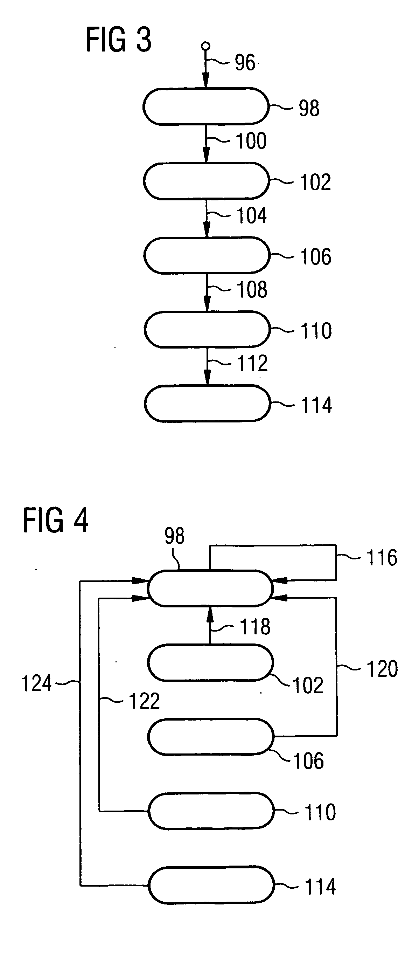

Fig. 2 zeigt schematisch den Aufbau des Installations-Serverrechners 14 mit dem Installationsportal 44. Der Backup-Serverrechner 16 ist identisch zu dem Installations-Serverrechner 14 aufgebaut. Das Installationsportal 44 besteht aus drei wesentlichen Teilen, und zwar aus einer Sammlung von html-Seiten 44a, aus einer eine dynamische Business-Logik implementierenden Sammlung von Applikationen 44b und aus einer Datenbank 44c. Im vorliegenden Ausführungsbeispiel sind alle drei Teile 44a bis 44c des Installationsportals 44 in einem einzigen Installations-Serverrechner 14 implementiert, der unter einem Betriebssystem 84, beispielsweise unter Linux, läuft. Die html-Seiten 44a des Installationsportals 44 werden über einen als Apache-Server ausgebildeten Webserver 86 des Installations-Serverrechners 14 bereitgehalten, die Applikationen 44b des Installationsportals 44 laufen auf einem Applikationsserver 88, der seinerseits in einer abgesicherten Umgebung 90, beispielsweise in einem JAVA-Runtime-Environment JRE läuft. Die Datenbank 44c des Installationsportals 44 ist in ein Datenbankprogramm 92, beispielsweise MySQL, integriert. Periodisch wiederkehrende cron-Jobs und Monitoring-Skripte werden in einem Hintergrundprogramm 94 ausgeführt. Fig. 3 zeigt den normalen Lebenszyklus einer Steuereinheit einer Haustechnikeinrichtung 10a bis 10c. In einem ersten Schritt 96 wird die Steuereinheit initialisiert und damit in einen ersten Zustand 98 überführt. Ausgehend vom ersten Zustand 98 wird die Steuereinheit in einem Schritt 100 aktiviert, und damit in einen zweiten Zustand 102 überführt. Ausgehend von dem zweiten Zustand 102 wird die Steuereinheit in einem Vorbereitungsschritt 104 zur Installation vorbereitet und damit in einen dritten Zustand 106 überführt. In einem Installationsschritt 108 wird ein Betriebsprogramm auf der Steuereinheit installiert und die Steuereinheit wird damit in einen vierten Zustand 110 überführt. In einem weiteren Schritt 112 wird die Steuereinheit in Betrieb genommen und damit in einen Betriebszustand 114 überführt.

Im ersten Schritt 96 lädt der Hardware-Lieferant 32 über die ftp-Schnittstelle 30 (vgl. Fig. 1) eine Datei zum Installationsportal 44 hoch, in der sich die wichtigen Daten der Steuereinheit befinden. In dem Zustand 98 existiert daher ein Datensatz mit der Seriennummer, einem Freischaltcode, einem Gerätetyp und weiteren zusätzlichen Daten der Steuereinheit der Haustechnikeinrichtung 10a bis 10c in der Datenbank 44c des Installationsportals 44. Eine Zustandskenngröße der Steuereinheit wird in der Datenbank 44c auf "initialisiert" und oben gesetzt.

In dem zweiten Schritt 100 meldet sich der Installateur über die http-Schnittstelle 34 des Installationsportals 44 mit der der Steuereinheit der Haustechnikeinrichtung 10c in ihrem Lieferumfang beiliegenden Seriennummer und einem Freischaltcode an. nach der erfolgreichen Anmeldung kann er alle für den Installationsvorgang relevanten Daten, wie die Sprache der Software, den Standard der Steuereinheit (das Installationsland), der selbst definierte Internet-Serviceprovider, eine E-Mail-Adresse usw. eingeben bzw. konfigurieren. Dazu stellt der Webserver 86 entsprechende html-Seiten aus der Sammlung von html-Seiten 44a bereit, die als Formulardateien ausgebildet sind und über die http-Schnittstelle 34 an ein Benutzerterminal des Installateurs übertragen werden. Der Benutzer, im vorliegenden Beispiel der Installateur 38, kann die gewünschten Daten in die Formularfelder der Formulardatei eintragen und diese über die http-Schnittstelle 34 an den Installations-Serverrechner 14 übertragen. Alternativ kann der Installateur 38 die notwendigen Daten über ein Mobilfunknetz, beispielsweise per SMS and den Installations-Serverrechner übertragen. Aus den übertragenen, ergänzten Formulardateien kann der Installations-Serverrechner Benutzerwunschkenngrößen extrahieren, und, wie im folgenden beschrieben, das Betriebsprogramm der Steuereinheit der Haustechnikeinrichtung 10a bis 10c abhängig von der Benutzerkenngröße konfigurieren. Die Benutzerwunschkenngrößen können insbesondere die Sprache, den Standort der Haustechnikeinrichtung 10a bis 10c, selbstdefinierte Internetserviceprovider, E-Mail-Adressen, Mobilfunk- oder Telefonnummern usw. enthalten. In dem zweiten Zustand 102 sind alle für die Software-Installation auf der Steuereinheit der Haustechnikeinrichtung 10a bis 10c notwendigen Daten in der Datenbank 44c des Installationsportals 44 auf dem Installations-Serverrechner 14 bzw. auf einer Speichereinheit 116 des Installations-Serverrechners gespeichert. Eine Zustandskenngröße der Steuereinheit der betreffenden Haustechnikeinrichtung wird in Datenbank 44c des Installationsportals 44 "aktiviert".

In dem Vorbereitungsschritt 104 befindet sich die Steuereinheit der Haustechnikeinrichtung in einem Zustand, in dem alle Regler angeschlossen sind und die Kommunikationsschnittstellen 46, 48 der Haustechnikeinrichtung 10a bis 10c mit dem Internet verbunden sind. Mit dem Betätigen eines hier nicht dargestellten Wartungstasters durch den Installateur 38 wird auf der Steuereinheit der betreffenden Haustechnikeinrichtung 10a bis 10c der Installationsprozess ausgelöst. Die Steuereinheit bzw. die Haustechnikeinrichtung 10a bis 10c meldet sich über die http-Schnittstelle 46 beim Installationsportal 44 an und lädt alle für den Installationsvorgang relevanten Konfigurationsdaten (z.B. den Internzugang betreffend) über die ftp-Schnittstelle 48 des Installationsportals 44 herunter. Nach erfolgreichem Download der Daten meldet sich die Steuereinheit beim Installationsportal 44 ab und baut die Verbindung ab.

In dem dritten Zustand 106 wird der Zustand der Steuereinheit bzw. der betreffenden Haustechnikeinrichtung 10a bis 10c in der Datenbank 44c des Installationsportals 44 auf "Installation vorbereitet" gesetzt.

Im Installationsschritt 108 erstellt die Steuereinheit der betreffenden Haustechnikeinrichtung 10a bis 10c eine aktuelle Reglerliste, in dem sie überprüft, welche Regler angeschlossen wurden. Danach verbindet sich die Steuereinheit selbstständig gemäß ihrer Konfiguration mit dem Internet und meldet sich über die http-Schnittstelle 46 beim Installationsportal 44 an. Nach der Übertragung der Liste aller angeschlossenen Regler über die ftp-Schnittstelle 48 an das Installationsportal 44 werden vom Installationsportal 44 entsprechend der für das Gerät eingestellten Konfigurationsdaten, wie Sprache, angeschlossen Regler und Gerätetyp sowie von den weiteren, von dem Hardware-Produzenten 32 in der Datenbank 44c abgelegten Konfigurationsdaten alle benötigten Software-Komponenten zusammengestellt und zum Download vorbereitet. Die Steuereinheit der Haustechnikeinrichtung 10a bis 10c stellt zyklische Anfragen über den Status bzw. das Vorhandensein der ebenfalls generierten Liste mit ftp-Befehlen, die das Herunterladen aller benötigten Dateien adressieren. Nachdem das Installationsportal 44 alle Software-Komponenten zusammengestellt und die Jobliste generiert worden ist, lädt sich die Steuereinheit der Haustechnikeinrichtung 10a bis 10c die Jobliste über die ftp-Schnittstelle 48 des Installationsportals 44 herunter.

Nach dem erfolgten ftp-Download der Jobliste startet die Steuereinheit der Haustechnikeinrichtung 10a bis 10c die Abarbeitung der Jobliste, wodurch sie alle benötigten Software-Komponenten vom Installationsportal herunterlädt. Nach erfolgreichem Herunterladen aller Software-Komponenten meldet sich die Haustechnikeinrichtung 10a bis 10c beim Installationsportal über die http-Schnittstelle 46 ab.

Im vierten Zustand 110 ist die Abarbeitung der gesamten Installationssequenz abgeschlossen. Der Zustand der betreffenden Haustechnikeinrichtung 10a bis 10c wird in der Datenbank 44c des Installationsportals 44 auf "installiert" gesetzt.

In dem Schritt 112 führt die Steuereinheit der Haustechnikeinrichtung 10a bis 10c, die die Software-Komponenten gemäß der Jobliste heruntergeladen hat, selbstständig einen Neustart durch. Nach dem erfolgreichen und ordnungsgemäßen Neustart mit der installierten und konfigurierten Software meldet sich die Steuereinheit der Haustechnikeinrichtung 10a bis 10c über die http-Schnittstelle 46 bei dem Installationsportal 44 an und meldet, dass sie in Betrieb gegangen ist. Aufgrund dieser Erfolgsmeldung durch die Haustechnikeinrichtung 10a bis 10c versendet das Installationsportal 44 an alle vorkonfigurierten E-Mail-Adressen oder Mobilfunknummern, die der Installateur 38 über die Formulardateien eingegeben hat, eine E-Mail bzw. eine SMS. Dazu benutzt es die smtp-Schittstelle 52 und den Mailserver 28 bzw. ein GSM- bzw. GPRS-Modem. Alternativ kann auch die Steuereinheit ein GPRS-Modem umfassen und damit die Erfolgsmeldung an das Installationsportal oder an vorkonfigurierte Empfänger verschicken.

In dem Betriebszustand 114 hat das Installationsportal 44 eine Bestätigung des erfolgreichen Neustarts der Haustechnikeinrichtung 10a bis 10c erhalten und abhängig vom Vorhandensein der konfigurierten E-Mail-Adressen ein oder mehrere E-Mails an die vom Installateur 38 hinterlegten Adressen versandt.

In der Datenbank 44c des Installationsportals 44 wird der Zustand der betreffenden Haustechnikeinrichtung 10a bis 10c auf "in Betrieb" gesetzt. Abweichend von dem unter Bezugnahme auf Fig. 3 beschriebenen normalen Lebenszyklus einer Steuereinheit einer Haustechnikeinrichtung 10a bis 10c gibt es Übergänge zwischen den Zuständen 98, 102, 106, 110, 114, die im Folgenden unter Bezugnahme auf die Figuren 4 bis 7 beschrieben werden.

Fig. 4 zeigt verschiedene Möglichkeiten, in dem die Steuereinheit einer Haustechnikeinrichtung 10a bis 10c in den ersten Zustand 98 gesetzt werden. Zunächst kann der Hardware-Lieferant 32 über die ftp-Schnittstelle 30 aktualisierte Daten der Steuereinheit zum Installationsprogramm 44 übertragen. Ein bereits existierender Datensatz der Steuereinheit wird in der Speichereinheit 116 bzw. in der Datenbank 44c des Installationsportals 44 gelöscht und ein neuer Datensatz für die entsprechende Steuereinheit bzw. die entsprechende Haustechnikeinrichtung 10a bis 10c wird in einem Schritt 116 angelegt. Eine solche Aktualisierung kann dadurch bedingt sein, dass die Steuereinheit nach bereits erfolgter Initialisierung nochmals einer Prüfstrecke der Hardware-Produktion durchläuft.

Falls eine solche Aktualisierung der Daten durch den Hardware-Lieferanten 32 erfolgt, während sich die Haustechnikeinrichtung 10a bis 10c im zweiten Zustand 102, im dritten Zustand 106, im vierten Zustand 110 oder im fünften Zustand 114 befindet, werden die bereits in der Datenbank 44c unter der Seriennummer registrierten Daten mit allen referenzierenden Daten logisch gelöscht und ein neuer Datensatz wird angelegt. Die Steuereinheit bzw. die Haustechnikeinrichtung 10a bis 10c wird analog zu Schritt 96 in Schritten 118 bis 124 initialisiert. Eine solche Initialisierung kann beispielsweise dann erfolgen, wenn die Steuereinheit der Haustechnikeinrichtung 10a bis 10c nach einer Funktionsstörung im Feld zurück in die Hardware-Produktion gelangt und erfolgreich repariert und wieder in den Umlauf gebracht wurde.

Falls die Steuereinheit bereits aktiviert war, muss der Installateur 38 gegebenenfalls die Konfigurationsdaten (beispielsweise Spracheinstellung, E-Mail-Adresse, Internet-Serviceprovider, Konfigurationsdaten etc.) nochmals eingeben.

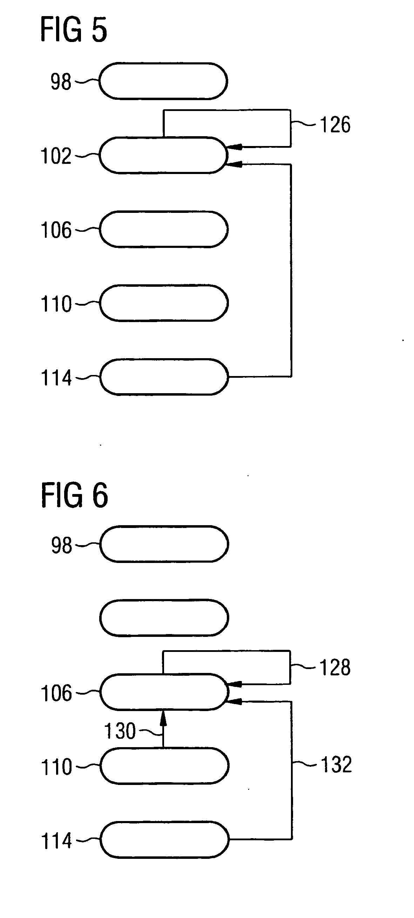

Fig. 5 zeigt mögliche Übergänge in den zweiten Zustand 102, die abweichend vom normalen Lebenszyklus auftreten können. Wenn eine Steuereinheit bzw. wenn eine Haustechnikeinrichtung 10a sich bereits in dem aktivierten Zustand 102 befindet und der Installateur 38 sich über die http-Schnittstelle beim Installationsportal 44 anmeldet, kann er Änderungen an den bestehenden Konfigurationsdaten vornehmen. Die in der Datenbank 44c auf der Speichereinheit 116 des Installations-Serverrechners 14 bereits gespeicherten Konfigurationsdaten der Steuereinheit werden logisch gelöscht und die neuen Daten der Steuereinheit werden in einem Schritt 126, der den Zustand 98 in sich selbst überführt, gespeichert. Dieser Fall kann beispielsweise eintreten, wenn der Installateur 38 die Konfigurationsdaten fehlerhaft eingegeben hat (beispielsweise die falsche Sprache ausgewählt bzw. die falschen Internet-Serviceprovider-Daten ausgewählt hat etc.), so dass eine Korrektur der Konfigurationsdaten notwendig ist.

Fig. 6 zeigt mögliche Übergänge in den dritten Zustand 106, in dem die Installation vorbereitet ist, die abweichend vom normalen Lebenszyklus der Steuereinheit einer Haustechnikeinrichtung 10a bis 10c auftreten können.

In dem Zustand 106 sind alle Regler angeschlossen und die Steuereinheit ist über die entsprechenden Kommunikationsschnittstellen 46, 48 mit dem Internet 20 verbunden. Wenn beispielsweise während des Ablaufs der Installationssequenz auf der Haustechnikeinrichtung 10a bis 10c entweder ein Stromausfall eingetreten ist oder wenn der Installateur 38 die Steuereinheit bzw. Haustechnikeinrichtung 10a bis 10c von der Stromzufuhr getrennt hat und danach erneut den Wartungstaster betätigt hat, um ein erneutes Starten der Installationssequenz zu bewirken, wird die Steuereinheit in einem Schritt 128, der den Zustand 106 in sich selbst überführt, in den Vorbereitungszustand 106 überführt oder, wenn die Haustechnikeinrichtung 10a bis 10c bereits in dem Zustand 110 oder dem Betriebszustand 114 war, wird sie in Schritt 130 bzw. 132 in Zustand 106 zurückgesetzt.

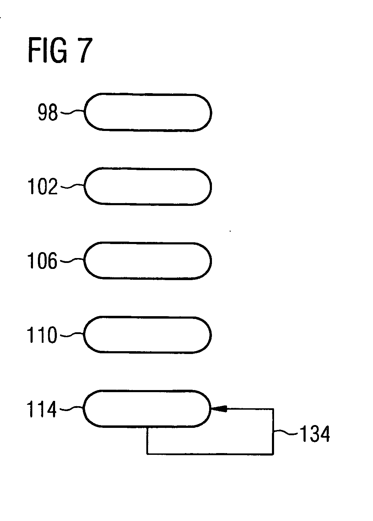

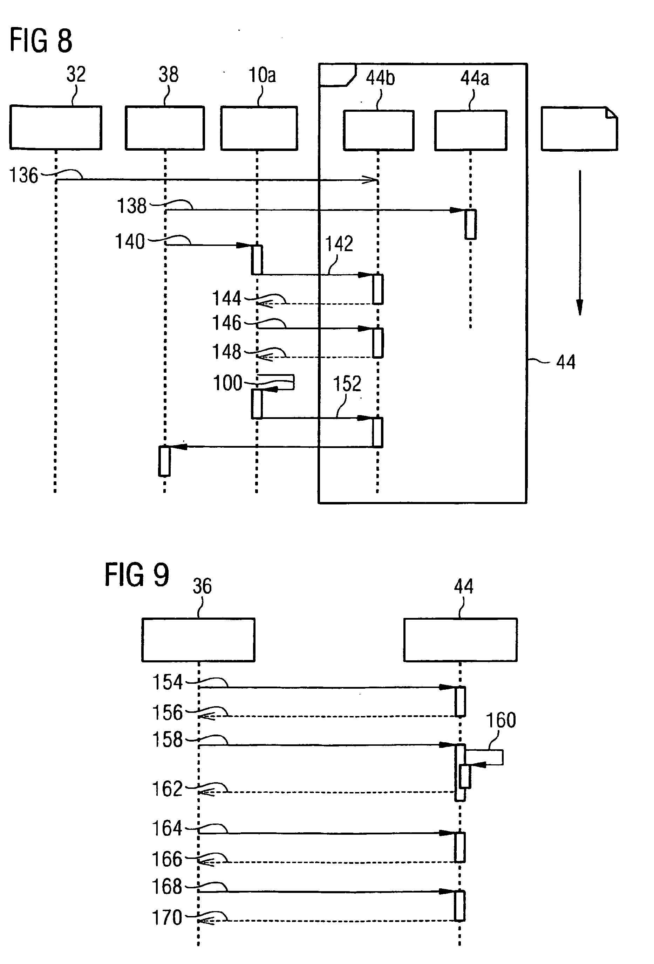

Fig. 7 zeigt eine Möglichkeit, wie die Steuereinheit abweichend von dem Schritt 112 in Fig. 3 dargestellten normalen Lebenszyklus in den Betriebszustand 114 überführt werden kann. Wenn die Steuereinheit durch den Installateur 98 vom Stromnetz getrennt wurde bzw. ein Stromausfall eintritt, fährt die Steuereinheit nach Beendigung der Trennung vom Netz wieder hoch und stellt in einem Schritt 134 den Betriebszustand 114 wieder her. Fig. 8 zeigt ein Sequenzdiagramm des normalen, in Fig. 3 dargestellten Lebenszyklus einer Steuereinheit einer Haustechnikeinrichtung 10a und die Interaktion des Hardware-Produzenten 33, des Installateurs 38 und der Haustechnikeinrichtung 10a, die beispielhaft für alle über das Installationsportal gesteuerten Haustechnikeinrichtungen dargestellt ist, mit dem Installationsportal 44. Der Hardware-Produzent initialisiert in einem Schritt 136 die Steuereinheit der Haustechnikeinrichtung 10a in einem nicht über die html-Seiten 44a zugänglichen, im Hintergrund laufenden Teil 44b des Installationsportals 44. In dem in Fig. 8 vertikal nach unten fortschreitenden Ablauf aktiviert der Installateur 38 in einem Schritt 138, der dem Schritt 100 in Fig. 3 entspricht, die Steuereinheit 10a und benutzt dazu einen Zugang über die html-Seiten 44a des Installationsportals. Anschließend drückt der Installateur 38 in einem Schritt 140 einen Wartungstaster der Steuereinheit der Haustechnikeinrichtung 10a und löst damit den automatisch ablaufenden Schritt 142 aus, der dem Schritt 104 in Fig. 3 entspricht und in dem die Installation vorbereitet wird. In einem Schritt 144 lädt die Steuereinheit der Haustechnikeinrichtung die Liste mit möglichen Internet-Serviceprovidern herunter, meldet sich in einem Schritt 146 bei dem Installationsportal an und lädt über die ftp-Schnittstelle 48 in einem Schritt 148 die benötigten Software-Komponenten abhängig von den in der Datenbank 44c abgelegten Konfigurationsdaten der Haustechnikeinrichtung 10a. In einem Schritt 150 startet die Haustechnikeinrichtung 10a neu und meldet in einem Schritt 152 die erfolgreiche Inbetriebnahme an das Installationsportal 44. Das Installationsportal 44 leitet die Meldung über die erfolgreiche Inbetriebnahme über den Mailserver 28 an den Installateur 38 weiter.

Fig. 9 zeigt die Interaktion eines Software-Produzenten 36 mit dem Installationsportal 44 über die http-Schnittstelle 34. In einem Schritt 154 meldet sich der Software-Produzent 36 bei dem Installationsportal 44 an und erhält in einem Schritt 156 eine Rückmeldung über die erfolgreiche Anmeldung. In einem Schritt 158 kann der Software-Produzent 36 über einen http-Upload Software auf das Installationsportal 44 hochladen. Das Installationsportal 44 speichert in einem Schritt 160 die in dem Schritt 158 hochgeladenen Software-Komponenten in der Speichereinheit 116 des Installations-Serverrechners 14. Dabei bereitet das Installationsportal 44 die empfangenen Dateien für die Bereitstellung zur Installation auf.

In einem Schritt 162 bestätigt das Installationsportal 44 dem Software-Produzenten 36 den erfolgreichen Datei-Upload.

In einem Schritt 164 wählt der dem Software-Produzent 36 die zu aktivierende Softwareversion in einem Formular aus und sendet das Formular zum Installationsportal 44. Das Installationsportal 44 aktualisiert die Datenbasis, so dass die aktivierte Version der Software-Komponente zum download angeboten werden kann. In einem Schritt 166 bestätigt das Installationsportal dem Software-Produzenten 36 die erfolgreiche Aktivierung.

In einem Schritt 168 meldet der Software-Produzent 36 sich beim Installationsportal 44 ab und in einem Schritt 170 wird die erfolgreiche Abmeldung bestätigt.

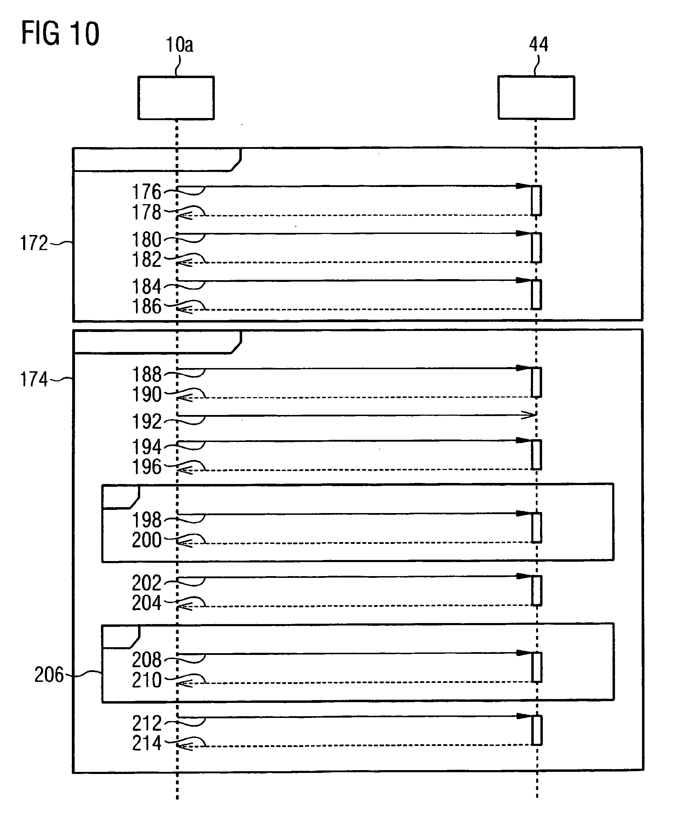

Fig. 10 zeigt ein Sequenzdiagramm eines gesamten Installationsprozesses, der dem Schritt 108 in Fig. 3 entspricht. Der Installationsprozess umfasst einen Vorbereitungsteil 172 und einen eigentlichen 172 und einen eigentlichen Installationsteil 174. In dem Vorbereitungsteil 172 meldet sich die Steuereinheit der Haustechnikeinrichtung 10a in einem Schritt 176 über die http-Schnittstelle bei dem Installationsportal 44 an. Das Installationsportal 44 meldet in einem Schritt 178 die erfolgreiche Anmeldung an die Steuereinheit der Haustechnikeinrichtung 10a zurück. In einem Schritt 180 lädt das Installationsportal 44 die Konfigurationsdaten von der Steuereinheit der Haustechnikeinrichtung 10a über die ftp-Schnittstelle 48 herunter und bestätigt die erfolgreiche Datenübertragung in einem Schritt 182. In einem Schritt 184 meldet sich Steuereinheit der Haustechnikeinrichtung 10a bei dem Installationsportal 44 ab, welches die erfolgreiche Abmeldung in einem Schritt 186 bestätigt.

Zur eigentlichen Installation meldet sich die Steuereinheit der Haustechnikeinrichtung 10a in einem Schritt 188 bei dem Installationsportal 44 an, welches in einem Schritt 190 die erfolgreiche Anmeldung bestätigt. In einem Schritt 192 lädt die Steuereinheit der Haustechnikeinrichtung 10a eine Reglerliste, die eine Anzahl und einen Typ von an die Steuereinheit angeschlossenen Reglern und damit Konfigurationsdaten im Feld zu dem Installationsportal hoch. Wenn der Upload der Reglerliste vollständig ist, meldet die Steuereinheit der Haustechnikeinrichtung 10a dies in einem Schritt 194 an das Installationsportal 44, welches den Eingang der vollständigen Reglerliste in einem Schritt 196 bestätigt.

In einem Schritt 198 fragt die Haustechnikeinrichtung 10a ab, ob eine Jobliste im Installationsportal 44 vorliegt und erhält in einem Schritt 200 eine positive oder negative Antwort. Wenn eine Jobliste vorhanden ist, fordert die Haustechnikeinrichtung 10a diese in einem Schritt 202 an und das Installationsportal 44 übermittelt in einem Schritt 204 die Jobliste an die Haustechnikeinrichtung 10a. In einer Schleife 206 werden ein Schritt 208, in dem die Haustechnikeinrichtung 10a eine Datei gemäß der Jobliste anfordert und ein Schritt 210, in dem das Installationsportal 44 über die ftp-Schnittstelle 48 eine Datei an die Haustechnikeinrichtung 10a überträgt, wiederholt, bis die Jobliste abgearbeitet ist. In einem Schritt 212 meldet sich die Haustechnikeinrichtung 10a bei Installationsportal 44 ab und das Installationsportal bestätigt die erfolgreiche Abmeldung in einem Schritt 214.

Ein Diagramm einer Monitoring-Sequenz, die auf einem Monitoring-Rechner abläuft. In einem ersten Schritt 216 startet der Monitorrechner über die ssh-Schnittstelle 78 ein Monitor-Skript auf dem Installations-Serverrechner 14. Dazu wählt sich der Monitoring-Server 18 als Monitoring-User 218 die http-Schnittstelle 68 in einem Schritt 220 beim Installations-Serverrechner 14 ein. Dieser bestätigt die Anmeldung in einem Schritt 222. In einem Schritt 224 übermittelt der Monitoring-User 218 eine Aktivierungsanfrage an den Installations-Serverrechner 44. Dieser bestätigt in einem Schritt 226 die Aktivierung. In einem Schritt 228 meldet sich der Monitoring-User 218 bei einem Backend des Installationsportals 44 an. Die Anmeldung wird in einem Schritt 230 bestätigt. In einem Schritt 232 übermittelt der Monitoring-User die Anfrage nach einer Konfigurationsdatei an das Backend des Installationsportals. Die Konfigurationsdatei wird in einem Schritt 234 heruntergeladen.

In einem Schritt 236 meldet sich der Monitoring-User beim Backend bzw. dem Business-Logikteil 44b des Installationsportals ab und die Abmeldung wird in einem Schritt 238 bestätigt. Zum Überprüfen einer Upload-Funktion meldet sich der Monitoring-User in einem Schritt 240 erneut beim Backend 44b des Installationsportals 44 an und die Anmeldung wird in einem Schritt 242 bestätigt. In einem Schritt 244 übermittelt der Monitoring-User einen ftp-Upload-Befehl an das Installationsportal 44 und bestätigt in einem Schritt 246 den vollständigen Upload einer Reglerliste. In einem Schritt 248 überprüft das Installationsportal 44 die Reglerliste und wertete diese aus. Falls die Reglerliste fehlerhaft ist, erfolgt in einem Schritt 250 eine entsprechende Einstufung. In diesem Fall generiert das Installationsportal in einem Schritt 252 eine Fehlernachricht und sendet diese über die smtp-Schnittstelle 52 über den Mailserver 28, den Mailserver 80 und die smtp-Schnittstelle 82 in einem Schritt 254 zurück an den Monitoring-Rechner 18, der einen Installateur simuliert. Gleichzeitig erzeugt das Installationsportal über die http-Schnittstelle 68 in einem Schritt 256 ein Fehlersignal. In einem Schritt 258 ruft der Monitoring-User 218 seine E-Mails von dem Mailserver 80 ab und empfängt über die smtp-Schnittstelle 82 in einem Schritt 260 die E-Mail vom Installationsportal 44, sofern die Reglerleiste fehlerhaft war. In einem Schritt 262 wertet der Monitor-Rechner als Monitoring-User 218 die empfangene E-Mail aus und übermittelt einen Monitoring-Report an den Monitor-Rechner 18. Falls ein Fehler aufgetreten ist, generiert der Monitor-Rechner 18 eine E-Mail und versendet diese in einem Schritt 264 an den Mailserver 18 und dieser stellt diese in einem Schritt 266 dem Systemadministrator 24 zu.

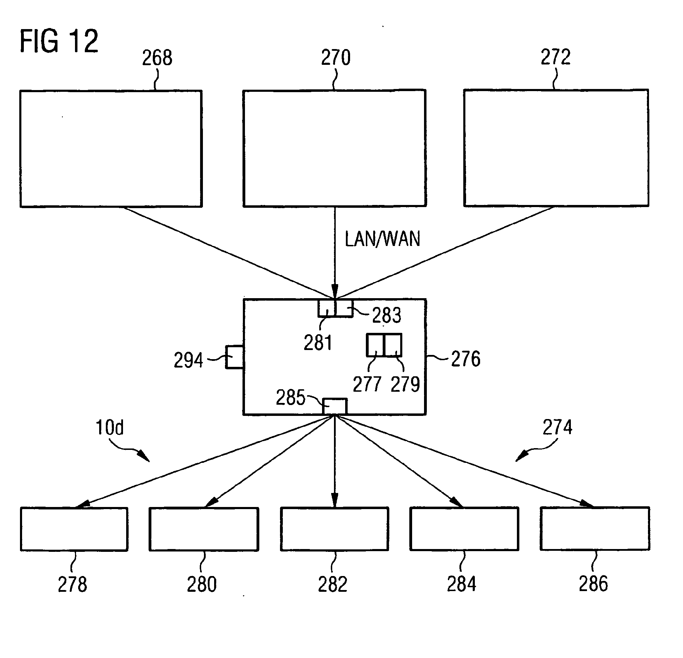

Fig. 12 zeigt eine alternative Ausgestaltung der Erfindung mit einer Haustechnikeinrichtung 10d, die eine Steuereinheit 276 und eine Vielzahl von individuellen Reglern 278 bis 286 umfasst. Die Steuereinheit 276 kommuniziert mit den individuellen Reglern über ein Feldbussystem 274 vom Typ local operating network (LON).

Die Steuereinheit 276 umfasst einen integrierten, als Software implementierten Netzwerk-Serverrechner 277 der mit einer Speichereinheit 279 zum Speichern von Webseiten ausgestattet ist. Die Webseiten bilden ein Bedienerportal mit HTML-Formularen, die zumindest einem Eingabemittel - also beispielsweise einen Button, eine Auswahlliste ein Eingabetextfeld oder ähnliches umfasst. Die Steuereinheit 276 kann über die Webseite betätigt, d.h. gesteuert oder geregelt werden. Der Bediener kann über das Eingabemittel beispielsweise Raumsolltemperaturen für die zu beheizenden Räume, in denen die individuellen Regler 278 bis 286 angeordnet sind, aufweisen.

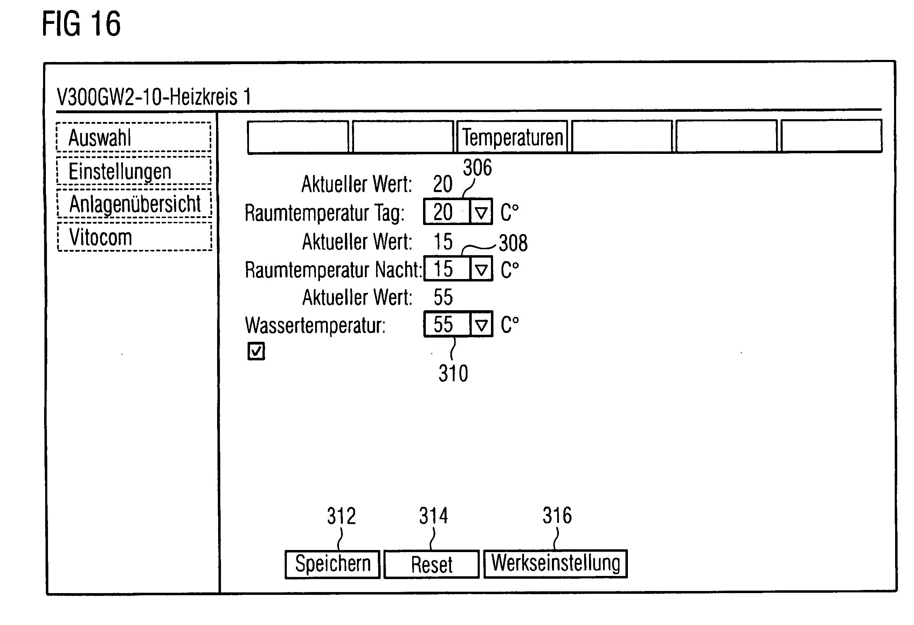

Figur 16 zeigt exemplarisch eine Webseite zum Steuern der Haustechnikeinrichtung über die Steuereinheit 276. Die Webseite enthält drei als Auswahllisten ausgebildete Eingabemittel 306 - 310 zum Eingeben von Regelparametern eines bestimmten Reglers 278 - 286. Ferner gibt es drei als Button ausgebildete Eingabemittel 312 - 316 zum Speichern und Zurücksetzen der ausgewählten Regelparameter bzw. zum Auswählen der Werkseinstellung.

Die Gesamtheit der Webseiten unterteilt sich in eine Gruppe, die Grundfunktionen betrifft, eine Gruppe, die erweiterte Funktionen betrifft, eine Gruppe, die Konfigurationsdaten betrifft und eine Gruppe, die einen Alarmhandler betrifft.

Die Gruppe, die Konfigurationsdaten betrifft erlaubt insbesondere die Eingabe der WAN und LAN Einstellungen, des e-mail providers, der Benutzerverwaltung und des Datums und der Uhrzeit.

Ferner hat die Steuereinheit 276 drei Kommunikationsschnittstellen 281, 283, 285 zum Herstellen von Netzwerkverbindungen, über welche die Webseiten abrufbar sind.

Eine erste, als Ethernet-Karte bzw. Ethernet-Schnittstelle ausgestaltete Kommunikationsschnittstelle 281 zum Herstellen einer lokalen Netzwerkverbindung (LAN) und ermöglicht eine bequeme Integration in ein Intranet.

Eine zweite Kommunikationsschnittstelle 283 zum Herstellen einer Internetverbindung bzw. einer allgemeinen Wide-Area-Network (WAN)-Verbindung kann als serieller Anschluss mit 115200Baud mit Hardware-Handshake-Signalen RTS, CTS, DTR und DSR ausgebildet sein. Mögliche Ausgestaltungen der Erfindung umfassen ein angeschlossenes internes analoges Modem mit 56k, ein ISDN-Terminaladapter ohne Kanalbündelung oder ein GSM/GPRS-Modem mit 9600bps bei GSM oder GPRS Class 2.

Der Anwender kann sich über die Kommunikationsschnittstelle 283 per Point-to-Point-Protocol (PPP) aus der Ferne einwählen und muss sich mit Benutzername und Passwort authentifizieren. Eine Authentifizierung findet über PAP oder CHAP statt. Diese Authentifizierung dient gleichzeitig als Basic-Authentification für den Zugriff auf die Webseiten. Dadurch ist aus der Ferne ein Zugriff über die Telefonnummer der Steuereinheit 276 möglich.

Die beiden Kommunikationsschnittstellen 281, 283 eröffnen die die Möglichkeit des gleichzeitigen Zugriffs über die Telefonleitung und über das lokale Netzwerk (LAN).

Anstatt der Ethernet-Schnittstelle 281 kann auch eine andere Schnittstelle, beispielsweise eine W-LAN-Schnittstelle mit einem entsprechenden Umsetzer, ein Analogmodem, ein ISDN-Terminaladapter, GSM-Modem oder GPRS-Modem oder ähnliches zur Bedienung der Steuereinheit 276 aus der Ferne vorgesehen sein.

Die dritte Kommunikationsschnittstelle 285 dient der Kommunikation mit den Reglern 278 - 286 über ein LON-Bussystem gemäß ANSI/EIA-709.x und EIA-852 sowie gemäß EN 14908. Es ermöglicht den neutralen Informationsaustausch zwischen Reglern 278 - 286 und der Steuereinheit 276. Die Kommunikationsschnittstelle 285 wird durch einen Neuron-Mikrokontroller zur Verfügung gestellt. Am Neuron-Mikrokontroller ist ein TP/FT-10-fähiger Transciever angeschlossen. Der Transciever übernimmt alla Aufgaben für die LON-Kommunikation.

Die Steuereinheit 276 übernimmt die Funktionalität eines Netzwerk-Serverrechners, der damit vollständig in die Steuereinheit 276 integriert ist. Dadurch kann die Kommunikation über das Internet oder über ein lokales Netzwerk unmittelbar mit der Steuereinheit 276 erfolgen und ein Umweg über einen zentralen, d.h. viele Kilometer entfernt von der Steuereinheit angeordneten und zur Vermittlung einer Kommunikation mit einer Vielzahl von Steuereinheiten für Haustechnikeinrichtungen ausgelegten Installations-Serverrechner kann vorteilhaft entfallen. Dadurch wird eine besonders flexibel bedienbare Steuereinheit 276 erreicht, die sowohl über das Internet als auch über ein lokales Netzwert, beispielsweise vom Typ LAN oder Ethernet, bedienbar ist. Durch die Integration der Webserverfunktionalität in die Steuereinheit 276 kann eine Bedienerfreundlichkeit der gesamten Anlage gesteigert werden.

Die Steuereinheit hat ferner ein Schaltelement bzw. eine Wartungstaste 294 zum Starten eines automatischen Installations- und/oder Wartungsvorgangs, in welchem die Steuereinheit die Webseite über die Kommunikationsschnittstelle von einem zentralen Installations-Serverrechner anfordert und beispielsweise über eine FTP-Verbindung herunterlädt. Die Installation des Benutzerportals, das von den heruntergeladenen Webseiten gebildet ist, dann weitgehend automatisiert ablaufen, ohne dass ein Benutzer komplexere Eingriffe als das bloße Drücken der Wartungstaste 294 vornehmen muss..

Ferner wird vorgeschlagen, dass die Steuereinheit zum Starten des Installationsvorgangs zumindest eine Teilnehmerliste eines lokalen Netzwerks an den zentralen Installations-Serverrechner überträgt. Dadurch kann eine an die Teilnehmerliste angepasste Installation ermöglicht werden. Der Begriff Teilnehmerliste umfasst in diesem Zusammenhang insbesondere eine Reglerliste von Reglern einer Heizungsanlage, die über ein lokales Netzwerk, beispielsweise ein LON-Netzwerk, mit der Steuereinheit der Heizungsanlage kommunizieren.

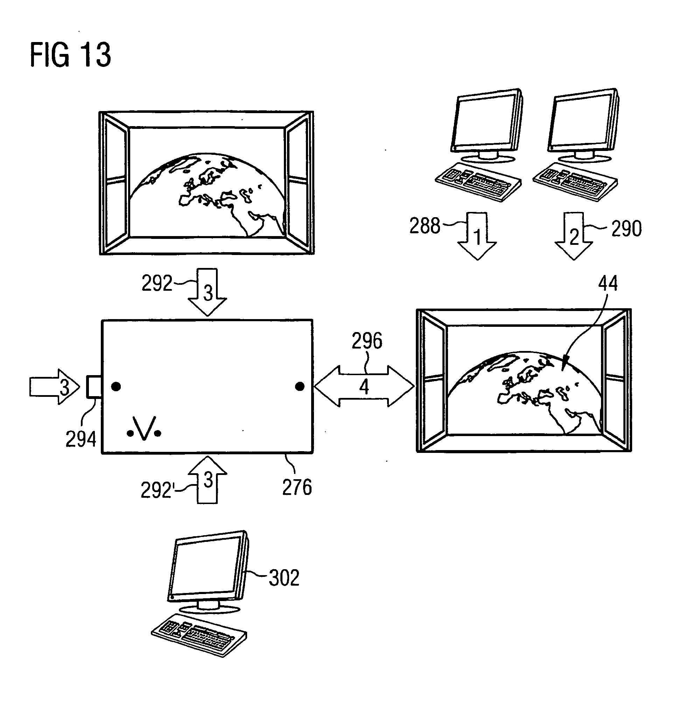

Der Installationsvorgang der Steuereinheit 276 aus Fig. 12 ist schematisch in Fig. 13 dargestellt. In einem Schritt 288 wird eine Seriennummer und ein Zugangscode der Haustechnikeinrichtung 10d bzw. der Steuereinheit 276 im Anschluss an die Produktion in der Datenbank 44c eines Installationsportals 44 hinterlegt. In einem zweiten Schritt 290 ist die Steuereinheit 276 bei einem Installateur 38 angekommen und muss im Installationsportal 44 registriert werden. Dazu liegt der Steuereinheit 276 ein Beipackzettel, auf dem der Portalname bzw. die Internetadresse des Installationsportals 44 und die Zugangsdaten stehen. Der Installateur 38 loggt sich bei dem Installationsportal 44 ein und meldet die Steuereinheit 276 der Haustechnikeinrichtung 10d an. Zu dieser Anmeldung gehören die Sprachauswahl, das Land, in dem die Steuereinheit 276 installiert wird sowie einige Angaben für den Verbindungsaufbau und den Typ der Steuereinheit 276. Für einen Zugriff auf die Steuereinheit 276 kann der Installateur 38 zudem eine Telefonnummer der Steuereinheit 276 eingeben. Der Installateur 38 hat ferner die Möglichkeit, nach der Registrierung der Steuereinheit 276 diese für einen eigenen Internetzugang einzurichten, der parallel zur Seriennummer und dem Zugangscode funktioniert.

In einem dritten Schritt 292 wird die Steuereinheit 276 elektrisch installiert und mit dem Telekommunikationsnetz verbunden. Zum Starten der Installation wird eine Wartungstaster 294 zehn Sekunden lang gedrückt. Zum Messen des Zeitintervalls in welchem die Wartungstaste 294 gedrückt ist, umfasst die Steuereinheit 276 eine Zeiterfassungseinheit und ist dazu ausgelegt, den Installationsvorgang zu starten, wenn ein Bediener das Schaltelement zumindest über eine vorgegebene Betätigungsdauer betätigt, kann ein versehentliches Auslösen des Installationsvorgangs durch ein kurzes Drücken auf das Schaltelement bzw. die Wartungstaste 294 vermieden werden.

In einem vierten Schritt 296 wählt sich die Steuereinheit 276 über einen zuvor vom Installateur 38 eingestellten Internetprovider in das Internet 20 ein und meldet sich beim Installationsportal 44 an. Das Installationsportal 44 übergibt der Steuereinheit 276 anhand der Seriennummer sofort eine Auswahl lokaler Internetprovider. Die Verbindung wird nach möglichst kurzer zeit wieder beendet.

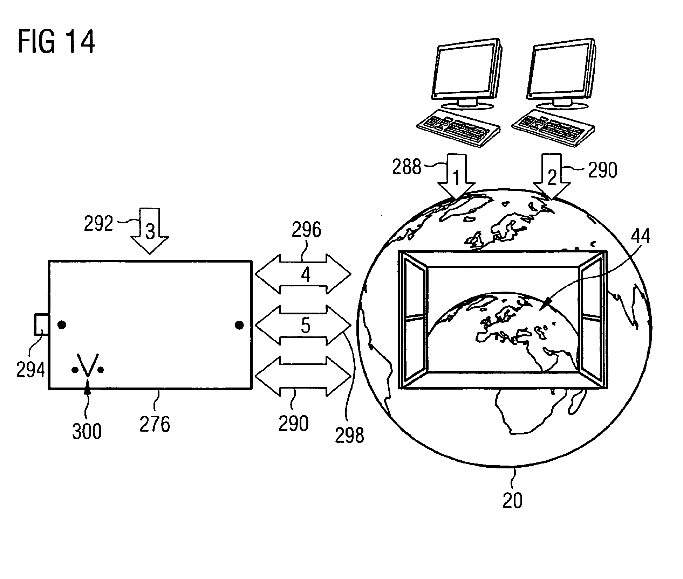

Fig. 14 zeigt einen weiteren Verlauf des Installationsvorgangs. In einem fünften 298 wählt sich die Steuereinheit 276 über einen lokalen Provider in das Internet 20 ein und mit dem Installationsportal 44 Verbindung auf. Das Installationsportal 44 beschickt die Steuereinheit 276 mit allen notwendigen Dateien und leitet einen Neustart ein. In einem weiteren Schritt 290 wählt sich die Steuereinheit 276 ein letztes Mal nach dem Neustart ein letztes Mal in das Internet 20 ein und meldet dem Installationsportal 44 die erfolgreiche Installation.

Sollte der vierte Schritt 296 fehlschlagen, ist dies dem Bediener bzw. Installateur 38 durch einen geeigneten Blinkcode anzuzeigen. Dazu umfasst die Steuereinheit 276 Signallampen 300. Je nach dem Blinkcode kann der Bediener erkennen, was die Ursache für den Fehler war. Als Gründe kommen beispielsweise in Betracht, dass die Steuereinheit 276 nicht im Installationsportal angemeldet war, dass die Steuereinheit 276 keine Telefonverbindung aufbauen konnte oder dass die Steuereinheit 276 keine erfolgreiche Verhandlung mit einem vom Installateur 38 hinterlegten Internetprovider führen konnte.

Die gesamte Installationsprozedur ist zudem aus der Ferne startbar. Dazu kann der Schritt 292 aus Fig. 13, in dem der Installateur 38 die logische Einrichtung der Steuereinheit 206 vornimmt, durch einen Schritt 292' (vgl. Fig. 13) ersetzt werden, in der die logische Einrichtung über einen Remote Procedure Call (RPC) bzw. eine Prozedur-Fernaufruf erfolgt. Ebenfalls über RPC kann die Mitteilung erfolgen, dass der Wartungstaster 294 für zehn Sekunden gedrückt wurde und damit die Einwahl in das Installationsportal 44 stattfinden soll. Die Steuereinheit muss in diesem Fall alle möglichen Erfolgs- und Fehlermeldungen an den Rechner 302 (vgl. Fig. 13) senden, der den Prozedur-Fernaufruf übermittelt hat.

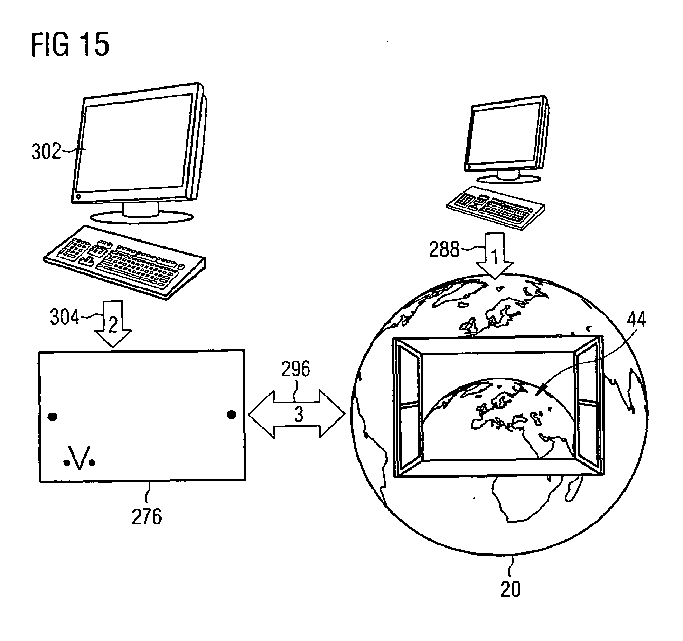

Eine derart vereinfachte Installation ist schematisch in Fig. 15 dargestellt. In einem ersten Schritt 288 wird, wie zuvor, die Steuereinheit 276 im Installationsportal 44 angelegt. Die logische Einrichtung durch den Installateur 38 und der Druck der Wartungstaste 294 im Schritt 292 wird durch einen einzigen Prozedur-Fernaufruf 304 von dem Rechner 302 ersetzt und in einem Schritt 296 wählt sich die Steuereinheit 276 der Haustechnikeinrichtung 10d über das Internet 20 in das Installationsportal 44 auf einem entfernten Installations-Serverrechner 14 ein.

## Patentansprüche

1. Vorrichtung mit einem Netzwerk-Serverrechner (277) und einer programmierbaren Steuereinheit (276) zum Steuern einer Haustechnikeinrichtung mit mehreren Reglern (10a - 10c), wobei der Netzwerk-Serverrechner (277) eine Speichereinheit (279) zum Speichern von wenigstens einer Webseite mit zumindest einem Eingabemittel (306 - 316) zum Betätigen der Steuereinheit (276) umfasst, und die Steuereinheit (276) zumindest eine Kommunikationsschnittstelle (281, 283, 285) zum Herstellen einer Netzwerkverbindung, über welche die Webseite abrufbar ist, umfasst, wobei der Netzwerk-Serverrechner (277) zumindest teilweise in die Steuereinheit (276) integriert ist,
**dadurch gekennzeichnet, dass** die Steuereinheit (276) zum Starten eines automatischen Installationsvorgangs ausgelegt ist, in welchem die Steuereinheit (276) über die Kommunikationsschnittstelle eine Reglerliste mit den an die Steuereinheit (276) angeschlossenen Reglern an einen zentralen Installations-Serverrechner (14) überträgt und die Webseite von dem zentralen Installations-Serverrechner (14) anfordert.

2. Vorrichtung nach Anspruch 1, **dadurch gekennzeichnet, dass** die Steuereinheit (276) eine erste Kommunikationsschnittstelle (281) zum Herstellen einer lokalen Netzwerkverbindung und eine zweite Kommunikationsschnittstelle (283) zum Herstellen einer Internet- oder Telefonverbindung umfasst.

3. Vorrichtung nach Anspruch 2, **dadurch gekennzeichnet, dass** die erste Kommunikationsschnittstelle (281) als Ethernet-Schnittstelle ausgebildet ist.

4. Vorrichtung nach einem der vorhergehenden Ansprüche, **dadurch gekennzeichnet, dass** die Steuereinheit (276) ein Schaltelement (294) zum Starten eines automatischen Installationsvorgangs umfasst.

5. Vorrichtung nach Anspruch 4, **dadurch gekennzeichnet, dass** die Steuereinheit eine Zeiterfassungseinheit umfasst und dazu ausgelegt ist, den Installationsvorgang zu starten, wenn ein Bediener das Schaltelement zumindest über eine vorgegebene Betätigungsdauer betätigt.

6. Vorrichtung zum Steuern und Überwachen von zumindest einer Haustechnikeinrichtung, die eine Steuereinheit (276) und mehrere an die Steuereinheit (276) angeschlossene Regler (278-286) umfasst, insbesondere zum Steuern einer Heizungsanlage, umfassend:
- wenigstens einen Installations-Serverrechner (14) mit einer Speichereinheit (116) zum Speichern von aus der Steuereinheit (276) übertragenen Konfigurationsdaten der Haustechnikeinrichtung,
**dadurch gekennzeichnet, dass** der Installations-Serverrechner (14) dazu ausgelegt ist,
- aus der Steuereinheit (276) über eine Kommunikationsschnittstelle eine Reglerliste mit den an die Steuereinheit (276) angeschlossenen Reblern zu empfangen,
- zumindest eine Webseite für eine Benutzerschnittstelle der Haustechnikeinrichtung abhängig von den Konfigurationsdaten zu erzeugen, die die Reglerliste mit den an die Steuereinheit (276) angeschlossenen Reglern (278 - 286) umfassen, und
- die zumindest eine Webseite der Benutzerschnittstelle über eine Kommunikationsverbindung (46, 48) an die Haustechnikeinrichtung zu übertragen.

7. Vorrichtung nach Anspruch 6, **gekennzeichnet durch** ein Mittel zum Herstellen einer Kommunikationsverbindung (46, 48) zwischen dem Installations-Serverrechner (14) und wenigstens einer der Haustechnikeinrichtungen.

8. Vorrichtung nach einem der vorhergehenden Ansprüche 6 oder 7 **gekennzeichnet durch** ein Mittel zum Herstellen einer Internetverbindung zwischen dem Installations-Serverrechner und einem Benutzerterminal.

9. Vorrichtung nach einem der Ansprüche 6 bis 8, **dadurch gekennzeichnet, dass** die Kommunikationsverbindung(46, 48) eine Internet-oder Mobilfunkkommunikationsverbindung ist.

10. Vorrichtung nach einem der Ansprüche 6 bis 9, **dadurch gekennzeichnet, dass** der Installations-Serverrechner (14) dazu ausgelegt ist, eine Formulardatei zu erzeugen und die Formulardatei über die Internet- oder Mobilfunkkommunikationsverbindung an das Benutzerterminal zu übertragen.

11. Vorrichtung nach einem der Ansprüche 6 - 10, **dadurch gekennzeichnet, dass** der Installations-Serverrechner (14) dazu ausgelegt ist, über die Kommunikationsverbindung (46, 48) Diagnosedaten von der Haustechnikeinrichtung abzufragen.

12. Vorrichtung nach einem der Ansprüche 6 - 11, **gekennzeichnet durch** eine die Speichereinheit (116) umfassende Datenbank (44c).

13. Vorrichtung nach einem der Ansprüche 6 - 12, **gekennzeichnet durch** zumindest einen Web-Server (86) zum Bereitstellen von Internetformularen zur Eingabe von Konfigurationsdaten.

14. Verfahren zum Steuern und Überwachen von zumindest einer Haustechnikeinrichtung mit mehreren Reglern (10a - 10c), insbesondere einer Heizungsanlage, das folgende Schritte umfasst
- Bereitstellen von Konfigurationsdaten der Haustechnikeinrichtung in einem Installations-Serverrechner (14); wobei die Konfigurationsdaten eine Reglerliste mit den an die Steuereinheit (276) angeschlossenen Reglern (278 - 286) umfassen;
- Starten eines automatischen Installationsvorgangs, in welchem eine Steuereinheit (276) zum Steuern der Haustechnikeinrichtung über eine Kommunikationsschnittstelle eine Reglerliste mit den an die Steuereinheit (276) angeschlossenen Reglern an einen zentralen Installations-Serverrechner (14) überträgt und eine Webseite von dem zentralen Installations-Serverrechner (14) anfordert.
- Erzeugen zumindest eines Konfigurationsparameters durch den Installations-Serverrechner (14) für eine Benutzerschnittstelle der Haustechnikeinrichtung abhängig von den Konfigurationsdaten;
- Übertragen des zumindest einen Konfigurationsparameters über eine Kommunikationsverbindung (46, 48) an die Haustechnikeinrichtung.

## Claims

1. A device having a network server computer (277) and a programmable controller (276) for controlling a domestic technology service (10a - 10c) having a plurality of regulators, wherein the network server computer (277) comprises a memory unit (279) for storing at least one website using at least one input means (306 - 316) for actuating the controller (276), and the controller (276) comprises at least one communication interface (281, 283, 285) for establishing a network connection, via which the website can be retrieved, wherein the network server computer (277) is integrated at least partially into the controller (276),
**characterized in that** the controller (276) is configured to start an automatic setup process in which the controller (276) transfers a list of regulators with the regulators connected to the controller (276) to a central setup server computer (14) and requests the website from the central setup server computer (14) via the communication interface.

2. The device according to claim 1, **characterized in that** the controller (276) comprises a first communication interface (281) for establishing a local network connection and a second communication interface (283) for establishing an internet or telephone connection.

3. The device according to claim 2, **characterized in that** the first communication interface (281) is formed as an Ethernet interface.

4. The device according to any one of the preceding claims, **characterized in that** the controller (276) has a switching element (294) for starting an automatic setup process.

5. The device according to claim 4, **characterized in that** the controller comprises a time detection unit and is configured to start the setup process if a user actuates the switching element at least over a predetermined actuation period.

6. A device for controlling and monitoring at least one domestic technology device having a controller (276) and a plurality of regulators (278 - 286) connected to the controller (276), in particular for controlling a heating installation, comprising:
- at least one setup server computer (14) having a memory unit (116) for storing configuration data of the domestic technology device transferred from the controller (276),
**characterized in that** the setup server computer (14) is configured to
- receive a list of regulators with the regulators connected to the controller (276) from the controller (276) via a communication interface,
- generate at least one website for a user interface of the domestic technology device in dependence of the configuration data which comprises a list of regulators with the regulators (278 - 286) connected to the controller (276), and
- to transfer the at least one website of the user interface via a communication connection (46, 48) to the domestic technology device.

7. The device according to claim 6, **characterized by** a means for establishing a communication connection (46, 48) between the setup server computer and at least one of the domestic technology devices.

8. The device according to any one of the preceding claims 6 or 7, **characterized by** a means for establishing an internet connection between the setup server computer and a user terminal.

9. The device according to any one of claims 6 to 8, **characterized in that** the communication connection (46, 48) is an internet or mobile telephony communication connection.

10. The device according to any one of claims 6 to 9, **characterized in that** the setup server computer (14) is configured to generate a form file and to transfer the form file to the user terminal via the internet or mobile telephony communication connection.

11. The device according to any one of claims 6 to 10, **characterized in that** the setup server computer (14) is configured to inquire diagnostic data from the domestic technology device via the communication connection (46, 48).

12. The device according to any one of claims 6 to 11, **characterized by** a database (44c) comprising the memory unit (116).

13. The device according to any one of claims 6 to 12, **characterized by** at least one web server (86) for providing internet forms for inputting configuration data.

14. A method for controlling and monitoring at least one domestic technology device (10a - 10c) having a plurality of regulators, in particular a heating installation, comprising the following steps:
- providing configuration data of the domestic technology device in a setup server computer (14); the configuration data comprising a list of regulators with the regulators (278 - 286) connected to the controller (276);
- starting an automatic setup process in which a controller (276) transfers a list of regulators with the regulators connected to the controller (276) to a central setup server computer (14) for controlling the domestic technology device and requests a website from the central setup server computer (14) via a communication interface;
- generating at least one configuration parameter by the setup server computer (14) for a user interface of the domestic technology device in dependence of the configuration data;
- transferring the at least one configuration parameter to the domestic technology device via a communication connection (46, 48).

## Revendications

1. Dispositif comportant un ordinateur serveur (277) à réseau et une unité de commande (276) programmable pour commander un système domotique comportant plusieurs régulateurs (10a - 10c), l'ordinateur serveur (277) à réseau comprenant une unité de mise en mémoire (279) pour mettre en mémoire au moins un site Internet, comprenant au moins un organe d'entrée (306 - 316) pour actionner l'unité de commande (276), et l'unité de commande (276) comprenant au moins une interface de communication (281, 283, 285) pour établir une connexion au réseau permettant de consulter le site Internet, l'ordinateur serveur (277) à réseau étant intégré au moins en partie dans l'unité de commande (276),
**caractérisé en ce que** l'unité de commande (276) est conçue pour lancer une opération d'installation automatique, lors de laquelle, par l'intermédiaire de l'interface de communication, l'unité de commande (276) transmet une liste de régulateurs, présentant les régulateurs raccordés à l'unité de commande (276), à un ordinateur serveur d'installation (14) central, et demande le site Internet à l'ordinateur serveur d'installation (14) central.

2. Dispositif selon la revendication 1, **caractérisé en ce que** l'unité de commande (276) comprend une première interface de communication (281) pour établir une connexion au réseau local, et une seconde interface de communication (283) pour établir une connexion Internet ou téléphonique.

3. Dispositif selon la revendication 2, **caractérisé en ce que** la première interface de communication (281) est réalisée sous forme d'interface Ethernet.

4. Dispositif selon l'une des revendications précédentes, **caractérisé en ce que** l'unité de commande (276) comprend un élément de commutation (294) pour lancer une opération d'installation automatique.

5. Dispositif selon la revendication 4, **caractérisé en ce que** l'unité de commande comprend un système d'enregistrement horaire et est conçue pour lancer l'opération d'installation lorsqu'un opérateur actionne l'élément de commutation au moins pendant une durée d'actionnement prédéterminée.

6. Dispositif de commande et de surveillance d'au moins un système domotique comprenant une unité de commande (276) et plusieurs régulateurs (278 - 286) raccordés à l'unité de commande (276), en particulier pour commander une installation de chauffage, comprenant :
- au moins un ordinateur serveur d'installation (14) comprenant une unité de mise en mémoire (116) pour mettre en mémoire des données de configuration du système domotique transmises de l'unité de commande (276),
**caractérisé en ce que** l'ordinateur serveur d'installation (14) est conçu pour
- recevoir de l'unité de commande (276) une liste de régulateurs, présentant les régulateurs raccordés à l'unité de commande (276), via une interface de communication,
- produire au moins un site Internet pour une interface utilisateur du système domotique en fonction des données de configuration qui comprennent la liste de régulateurs présentant les régulateurs (278 - 286) raccordés à l'unité de commande (276), et
- transmettre au système domotique ledit au moins un site Internet de l'interface utilisateur via une connexion de communication (46, 48).

7. Dispositif selon la revendication 6, **caractérisé par** un organe pour établir une connexion de communication (46, 48) entre l'ordinateur serveur d'installation (14) et l'un au moins des systèmes domotiques.

8. Dispositif selon l'une des revendications précédentes 6 ou 7, **caractérisé par** un organe pour établir une connexion Internet entre l'ordinateur serveur d'installation et un terminal d'utilisateur.

9. Dispositif selon l'une des revendications 6 à 8, **caractérisé en ce que** la connexion de communication (46, 48) est une connexion Internet ou une connexion de communication radiotéléphonique mobile.

10. Dispositif selon l'une des revendications 6 à 9, **caractérisé en ce que** l'ordinateur serveur d'installation (14) est conçu pour produire un fichier formulaire et pour transmettre au terminal d'utilisateur le fichier formulaire via la connexion Internet ou via la connexion de communication radiotéléphonique mobile.

11. Dispositif selon l'une des revendications 6 à 10, **caractérisé en ce que** l'ordinateur serveur d'installation (14) est conçu pour consulter des données de diagnostic du système domotique via la connexion de communication (46, 48).

12. Dispositif selon l'une des revendications 6 à 11, **caractérisé par** une base de données (44c) comprenant l'unité de mise en mémoire (116).

13. Dispositif selon l'une des revendications 6 à 12, **caractérisé par** au moins un serveur Web (86) pour mettre à disposition des formulaires Internet destinés à l'entrée de données de configuration.

14. Procédé de commande et de surveillance d'au moins un système domotique comprenant plusieurs régulateurs (10a - 10c), en particulier d'une installation de chauffage, comprenant les étapes suivantes :
- la fourniture de données de configuration du système domotique dans un ordinateur serveur d'installation (14) ; les données de configuration comprenant une liste de régulateurs, présentant les régulateurs (278 - 286) raccordés à l'unité de commande (276) ;
- le lancement d'une opération d'installation automatique, lors de laquelle une unité de commande (276) destinée à commander le système domotique transmet à un ordinateur serveur d'installation (14) central une liste de régulateurs, présentant les régulateurs raccordés à l'unité de commande (276), via une interface de communication, et demande un site Internet à l'ordinateur serveur d'installation (14) central,
- la génération d'au moins un paramètre de configuration par l'ordinateur serveur d'installation (14) pour une interface d'utilisateur du système domotique en fonction des données de configuration ;
- la transmission dudit au moins un paramètre de configuration au système domotique via une connexion de communication (46, 48).
